# EUROPEAN PATENT APPLICATION

(11) **EP 4 386 059 A1**
(43) Date of publication of application: **19.06.2024**
(21) Application number: 22855850.8
(22) Date of filing: 05.08.2022
(51) Int. Cl.: C09J 4/02, C09J 11/06, C09J 11/08

(54) **ANAEROBIC ADHESIVE COMPOSITION**

(30) Priority: 11.08.2021 JP 2021131257
(71) Applicant: Okura Industrial Co., Ltd., Marugame-shi, Kagawa 763-8508 (JP)
(72) Inventor: ITAMI, Shuhei, Marugame-shi, Kagawa 763-8508 (JP)
(74) Representative: Dennemeyer & Associates S.A.
(86) International application number: PCT/JP2022/030055
(87) International publication number: WO 2023/017788

(57) **Abstract**

To provide an anaerobic adhesive composition including a novel component that functions as an anaerobic curing accelerator in the anaerobic adhesive composition. The anaerobic adhesive composition of the present invention includes a (meth)acrylic monomer, an organic peroxide, and an anaerobic curing accelerator. The anaerobic curing accelerator contains a specific hydroquinone-based compound and benzoquinone.

## Description

### TECHNICAL FIELD

The present invention relates to an anaerobic adhesive composition.

### BACKGROUND ART

Anaerobic adhesive compositions are known as adhesive compositions including (meth)acrylic monomers. Anaerobic adhesive compositions develop adhesiveness in an anaerobic environment and thus is used for preventing loosening of bolts and nuts, fixing bearings and shafts, and the like. In anaerobic adhesive compositions, an anaerobic adhesive composition including saccharin (o-sulfobenzimide) as an anaerobic curing accelerator is known as a conventional art (see, for example, Patent Literatures 1 to 3).

### CITATION LIST

### PATENT LITERATURE

Patent Literature 1: JP-A-50-010886
Patent Literature 2: JP-A-50-046743
Patent Literature 3: JP-A-51-132234

### SUMMARY OF INVENTION

### PROBLEMS TO BE SOLVED BY INVENTION

Saccharin may develop a sufficient function as an anaerobic curing accelerator in anaerobic adhesive compositions. On the other hand, anaerobic adhesive compositions may be required to have compositions suitable for their uses, and a novel anaerobic curing accelerator is required from the viewpoint of the degree of freedom for compositions.

An object of an aspect of the present invention is to provide an anaerobic adhesive composition including a novel component that functions as an anaerobic curing accelerator in anaerobic adhesive compositions.

### SOLUTION TO PROBLEMS

In order to solve the above problems, an anaerobic adhesive composition according to an aspect of the present invention includes a (meth)acrylic monomer, an organic peroxide, and an anaerobic curing accelerator, and the anaerobic curing accelerator contains a specific hydroquinone-based compound and benzoquinone.

### EFFECTS OF INVENTION

According to an aspect of the present invention, it is possible to provide an anaerobic adhesive composition including a novel component that functions as an anaerobic curing accelerator in the anaerobic adhesive composition.

### DESCRIPTION OF EMBODIMENTS

An anaerobic adhesive composition according to an embodiment of the present invention includes a (meth)acrylic monomer, an organic peroxide, and an anaerobic curing accelerator. As described herein, "(meth)acryl" and "(meth)acrylate" are respectively generic terms for acryl and methacryl and generic terms for acrylate and methacrylate and mean one or both of them. Further, as described herein, "to" means a range including numerical values at both ends ("equal to and more than" and "equal to and less than").

### [(Meth)acrylic Monomer]

The (meth)acrylic monomer is a compound having radical polymerizability. Either one (meth)acrylic monomer or two or more (meth)acrylic monomers may be used. The (meth)acrylic monomer can be appropriately blended according to a known intended function.

Examples of the (meth)acrylic monomer include (meth)acrylic acid, (meth)acrylic acid alkyl ester, phenoxyethyl (meth)acrylate, cyclohexyl (meth)acrylate, tetrahydrofurfuryl (meth)acrylate, isobornyl (meth)acrylate, (meth)acrylic acid hydroxyalkyl ester such as hydroxyethyl acrylate, poly(meth)acrylate of polyhydric alcohol, epoxy (meth)acrylate obtained by addition reaction of (meth)acrylic acid to epoxy resin, urethane poly(meth)acrylate, polyester poly(meth)acrylate, and di(meth)acrylate of an alkylene oxide adduct of bisphenol A, such as ethoxylated bisphenol A dimethacrylate.

A further example of the (meth)acrylic monomer includes an acidic phosphoric acid ester that contains a (meth)acryloyloxy group. Examples of the ester include mono(meth)acryloyloxyethyl phosphate such as mono(2-hydroxyethylmethacrylate) phosphate, di(meth)acryloyloxyethyl phosphate, mono(meth)acryloyloxypropyl phosphate, di(meth)acryloyloxypropyl phosphate, mono(meth)acryloyloxy-β-chloropropyl phosphate, and di(meth)acryloyloxy-β-chloropropyl phosphate.

The (meth)acrylic monomer is a main component in the anaerobic adhesive composition according to an embodiment of the present invention. The contents of other components other than the (meth)acrylic monomer in the anaerobic adhesive composition can be appropriately determined based on the amount of the (meth)acrylic monomer.

### [Organic Peroxide]

The organic peroxide functions as an initiator for radical polymerization of the (meth)acrylic monomer. Either one organic peroxide or two or more organic peroxides may be used.

Examples of the organic peroxide include ketone peroxides, dialkyl peroxides, diacyl peroxides, peroxyesters, and hydroperoxides. Among them, hydroperoxides are more preferable from the viewpoint of curability and storage stability of the anaerobic adhesive composition. Examples of the hydroperoxides include tertiary butyl hydroperoxide, cumene hydroperoxide, diisopropylbenzene hydroperoxide, and p-menthane hydroperoxide.

The content of the organic peroxide in the anaerobic adhesive composition is preferably 0.05 parts by mass or more and more preferably 0.1 part by mass or more relative to 100 parts by mass of the (meth)acrylic monomer, from the viewpoint of curability. In addition, from the viewpoint of further enhancing storage stability of the anaerobic adhesive composition, the content is preferably 10 parts by mass or less and more preferably 5 parts by mass or less.

### [Anaerobic curing accelerator]

The anaerobic curing accelerator is a component for accelerating curing of the anaerobic adhesive composition, such as shortening the curing time of the anaerobic adhesive composition or accelerating the curing reaction. Either one anaerobic curing accelerator or two or more anaerobic curing accelerators may be used. The anaerobic curing accelerator contains a hydroquinone-based compound represented by the following formula (1) and benzoquinone.

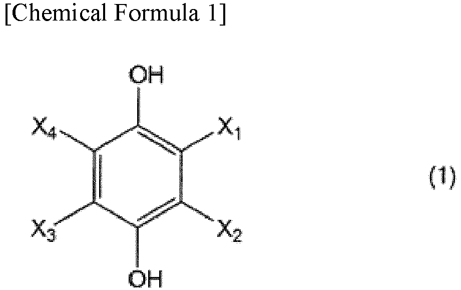

In formula (1), X1 to X4 each represent a hydrogen atom or one substituent, and at least one of X1 to X4 is a substituent. The number and positions of the substituents can be appropriately determined within a range in which the effects in an embodiment of the present invention are obtained. The number of the substituents may be any of 1 to 4. The positions of the substituents may be any of 2-, 3-, 5-, and 6-positions in the benzene ring in formula (1).

Either one substituent or two or more substituents may be used. All of them may be the same, or some or all of them may be different. Examples of the substituent include an alkyl group, an ester group, and a hydroxyl group. The alkyl group may be linear or may have a branched structure. The number of carbon atoms of the alkyl group may be, for example, 1 to 10.

Examples of the hydroquinone-based compound include methylhydroquinone, dimethylhydroquinone, methoxyhydroquinone, 2-t-butylhydroquinone, and 2,5-di-t-butylhydroquinone.

In the benzoquinone, the positional relationship between two oxygen atoms in the six-membered carbon atom ring may be ortho, meta, or para. The positional relationship (para) between two hydroxyl groups in the hydroquinone-based compound and the positional relationship between two oxygen atoms in the benzoquinone may be the same or different.

The anaerobic curing accelerator may be composed only of the hydroquinone-based compound and the benzoquinone or may further contain other components other than the hydroquinone-based compound and the benzoquinone.

From the viewpoint of further enhancing curability of the anaerobic adhesive composition, the content of the anaerobic curing accelerator in the anaerobic adhesive composition is preferably 0.05 part by mass or more and more preferably 0.1 part by mass or more relative to 100 parts by mass of the (meth)acrylic monomer. In addition, from the viewpoint of further enhancing storage stability of the anaerobic adhesive composition, the content is preferably 10 parts by mass or less and more preferably 5 parts by mass or less.

The content Ch of the hydroquinone-based compound in the anaerobic adhesive composition is preferably 0.1 part by mass or more, more preferably 0.2 part by mass or more, further preferably 1 part by mass or more, and still further preferably 2 parts by mass or more relative to 100 parts by mass of the (meth)acrylic monomer, from the viewpoint of developing the effect of accelerating curing of the anaerobic adhesive composition. The content Ch of the hydroquinone-based compound is preferably 5 parts by mass or less and more preferably 4 parts by mass or less relative to 100 parts by mass of the (meth)acrylic monomer, from the viewpoint of sufficiently maintaining and developing adhesiveness of the anaerobic adhesive composition.

In addition, the content of benzoquinone Cb in the anaerobic adhesive composition is preferably 0.01 part by mass or more and more preferably 0.03 part by mass or more relative to 100 parts by mass of the (meth)acrylic monomer, from the viewpoint of developing the effect of accelerating curing of the anaerobic adhesive composition. From the viewpoint of accelerating curing of the anaerobic adhesive composition, the content of benzoquinone Cb in the anaerobic adhesive composition is preferably 1.00 part by mass or less, further preferably 0.10 part by mass or less, and more preferably 0.08 part by mass or less relative to 100 parts by mass of the (meth)acrylic monomer.

### [Other Components]

The anaerobic adhesive composition of an embodiment of the present invention may further include other components other than those described above, within a range in which the effects in the above-described configurations are obtained. Either one other component or two or more other components may be used.

For example, the anaerobic adhesive composition of an embodiment of the present invention may further include a thickener. The thickener is a component for improving workability by enhancing the viscosity of the anaerobic adhesive composition. Examples of the thickener include acrylic resin, an acrylonitrilebutadiene-styrene copolymer (ABS resin), and a methyl methacrylate-butadiene-styrene copolymer (MBS resin). The content of the thickener in the anaerobic adhesive composition can be appropriately determined within a range in which the effect of improving workability is obtained. For example, the content may be 0 to 40 parts by mass or 10 to 30 parts by mass relative to 100 parts by mass of the (meth)acrylic monomer.

The anaerobic adhesive composition according to an embodiment of the present invention may further include, as the above-described other components, further additives such as a stabilizer, a filler, a reducing agent, a paraffin wax, a viscosity modifier, a colorant, an antibacterial agent, and a moisture curing accelerator, in a range in which the effects of an embodiment of the present invention are obtained.

### [Production Method and Use]

The anaerobic adhesive composition of an embodiment of the present invention may be prepared by mixing the above-described various components. The anaerobic adhesive composition of an embodiment of the present invention may be in the form of one component in which all of the above-described various components are mixed or may be in the form of two or more components which individually contain a part of the above-described various components and contain all the components as a whole. The anaerobic adhesive composition of an embodiment of the present invention can be used as an adhesive of a metal adherend and is used for preventing loosening of nuts, fixing bearings and shafts, and the like.

### [Operation and Effect]

In general, in anaerobic adhesive compositions, a hydroquinone-based compound and benzoquinone are known as components for enhancing storage stability of anaerobic adhesive compositions, that is, components that suppress radical polymerization of (meth)acrylic monomers. However, as described above, according to the studies by the present inventors, it has been found that when a hydroquinone-based compound is used in combination with benzoquinone, the hydroquinone-based compound functions as a component that accelerates curing of anaerobic adhesive compositions, that is, as a component that accelerates radical polymerization of (meth)acrylic monomers.

Hydroquinone-based compounds and benzoquinone are both known as materials of anaerobic adhesive compositions. Since a novel function is developed by a combination thereof, an anaerobic adhesive composition having enhanced curing accelerating properties can be configured with less kinds of materials.

Therefore, when a specific element or component is avoided from being blended in its use, it is suitable from the viewpoint of more simply configuring an anaerobic adhesive composition having desired adhesiveness.

Alternatively, since an anaerobic adhesive composition of which curing is accelerated is simply configured, it is possible to blend further functional materials, and development and spread of a multifunctional and high-performance anaerobic adhesive composition are expected.

Furthermore, according to an embodiment of the present invention, an anaerobic adhesive composition having curing accelerating properties can be configured with simpler composition, and an anaerobic curing accelerator that contains a sulfur component is not necessary in the present invention, whereas saccharin as a conventionally known anaerobic curing accelerator contains a sulfur component. Therefore, it is expected to reduce the load on the environment in the production of the anaerobic adhesive composition. Thus, an embodiment of the present invention is expected to contribute to conservation of the richness of land and sea in the Sustainable Development Goal (SDGs).

### [Conclusion]

As apparent from the above description, the anaerobic adhesive composition in an embodiment of the present invention includes a (meth)acrylic monomer, an organic peroxide, and an anaerobic curing accelerator, and the anaerobic curing accelerator contains a hydroquinone-based compound represented by the above-described formula (1) and benzoquinone. In the anaerobic adhesive composition, the hydroquinone-based compound and the benzoquinone accelerate curing of the anaerobic adhesive composition under an anaerobic environment. In this manner, according to an embodiment of the present invention, there is provided an anaerobic adhesive composition including a novel component that functions as an anaerobic curing accelerator.

In the anaerobic adhesive composition according to an embodiment of the present invention, the content of the hydroquinone-based compound may be 0.1 to 5 parts by mass relative to 100 parts by mass of the (meth)acrylic monomer, and the content of the benzoquinone may be 0.01 to 1.00 part by mass. This configuration is more effective from the viewpoint of developing the effect of accelerating curing of the anaerobic adhesive composition.

Further, in the anaerobic adhesive composition according to an embodiment of the present invention, the content of the hydroquinone-based compound may be 1 to 4 parts by mass relative to 100 parts by mass of the (meth)acrylic monomer, and the content of the benzoquinone may be 0.01 to 1.00 part by mass. This configuration is further more effective from the viewpoint of developing the effect of accelerating curing of the anaerobic adhesive composition.

In addition, the anaerobic adhesive composition in an embodiment of the present invention may further include a thickener. This configuration is further more effective from the viewpoint of enhancing workability and operability of the anaerobic adhesive composition.

The present invention is not limited to the above-described embodiments, and various modifications can be made within the scope illustrated in the claims. Embodiments obtained by appropriately combining technical means disclosed in different embodiments are also included in the technical scope of the present invention.

### EXAMPLES

An example of the present invention will be described below.

### [Preparation of Materials]

Materials illustrated below were prepared.
(Meth)acrylic monomer A: Hydroxyethyl acrylate (HEMA)
(Meth)acrylic monomer B: Isobornyl methacrylate (IBXMA)
Organic peroxide: Cumene hydroperoxide (CHP)
Thickener: Acrylic resin (PMMA)
Anaerobic curing accelerator A: 2,5-Di-t-butylhydroquinone (accelerator A)
Anaerobic curing accelerator B: Para-benzoquinone (PBQ)
Additive: 1,4-Hydroquinone (HQ)

### [Examples 1 and 2]

Materials listed in the following Table 1 were mixed in amounts (parts by mass) listed in Table 1 by a mixer. Each of anaerobic adhesive compositions 1 and 2 was thus obtained.

### [Comparative Examples 1 to 8]

Each of anaerobic adhesive compositions C1 to C8 was obtained in the same manner as in Example 1, except that the materials were changed as illustrated in the following Table 1.

### [Evaluation by Shear Strength]

The shear strength of each of the anaerobic adhesive compositions 1, 2, and C1 to C8 was measured by the following method and evaluated.

### (Method)

Fifty milligrams of the anaerobic adhesive composition was applied onto a portion having a width of 25 mm × a length of 12 mm on one test piece of a cold-rolled steel sheet (SPCC-SD) having a width of 25 mm × a length of 100 mm × a thickness of 1.0 mm. Then, the other test piece is superimposed on a surface coated with the adhesive composition in the one test piece, and both the test pieces are fixed with clips. Next, this is left to stand for 24 hours in an environment of 23°C × 50% RH.

Using an autograph, pulling was performed at a peeling rate of 2.5 mm/min in an environment of 23°C in such a direction that the test pieces were peeled from each other, and the shear strength (N/mm2) at that time was measured. When the shear strength was measured a plurality of times, the average value was taken as the shear strength in the anaerobic adhesive composition. The shear strength after 24 hours being 1.00 N/mm2 or more was determined as being practically desirable, and the obtained numerical value of the shear strength was judged according to the following criteria to evaluate adhesiveness of the anaerobic adhesive composition.

### (Criteria)

Excellent: Shear strength after 24 hours is 1.00 N/mm2 or more. Good: Shear strength after 24 hours is less than 1.00 N/mm2. Poor: Not cured.

The results are illustrated in Table 1. It is noted that "Not cured" in the table indicates that the anaerobic adhesive composition was not cured, and the test pieces were not bonded.

### [Table 1]

**Table 1**

| | | Anaerobic adhesive composition | | | | | | | | | |
|---|---|---|---|---|---|---|---|---|---|---|---|
| | | 1 | 2 | C1 | C2 | C3 | C4 | C5 | C6 | C7 | C8 |
| HEMA | | 40 | | | | | | | | | |
| IBXMA | | 40 | | | | | | | | | |
| CHP | | 4 | | | | | | | | | |
| PMMA | | 13 | | | | | | | | | |
| Accelerator A | | 0.3 | 3 | - | - | - | - | 0.3 | 3 | - | - |
| PBQ | | 0.05 | 0.05 | - | 0.05 | 0.1 | 0.5 | - | - | 0.05 | 0.05 |
| HQ | | | | - | - | - | - | - | - | 0.3 | 3 |
| Shear strength (N/mm²) | 1 | 1.51 | 1.27 | Not cured | Not cured | Not cured | Not cured | Not cured | 0.02 | Not cured | Not cured |
| | 2 | 0.48 | 1.29 | | | | | | Not cured | | |
| | 3 | - | - | | | | | | 0.06 | | |
| | Average | 1.00 | 1.28 | - | - | - | - | - | 0.04 | - | - |
| Judgment | | Excellent | Excellent | Poor | Poor | Poor | Poor | Poor | Good | Poor | Poor |

### [Discussion]

As apparent from Table 1, it was confirmed that the anaerobic adhesive compositions 1 and 2 which include both the hydroquinone-based compound and the benzoquinone were sufficiently cured in an anaerobic environment and developed shear strength.

On the other hand, the anaerobic adhesive composition C1 which includes neither the hydroquinone-based compound nor the benzoquinone, the anaerobic adhesive compositions C2 to C4 which include only the hydroquinone-based compound, and the anaerobic adhesive compositions C5 and C6 which include only the benzoquinone are all not cured or slightly cured under an anaerobic environment.

Further, none of the anaerobic adhesive compositions C7 and C8 which include hydroquinone in place of the hydroquinone-based compound is cured under an anaerobic environment.

As apparent from the above, blending both the hydroquinone-based compound and the benzoquinone in the anaerobic adhesive composition accelerates curing of the anaerobic adhesive composition under an anaerobic environment with the result that sufficient adhesiveness is developed.

As described above, the hydroquinone-based compound (2,5-di-t-butylhydroquinone) and the benzoquinone are known as polymerization inhibitors that enhance storage stability in (meth)acrylic anaerobic adhesive compositions. The reason for acting as a curing accelerator by blending both of these compounds in amounts illustrated in Table 1 into an anaerobic adhesive composition is not clear, but it is considered as follows. That is, it is considered that the hydroquinone-based compound and the benzoquinone co-exist in the anaerobic adhesive composition to activate exchange of electrons during the catalytic cycle, with the result that the radical polymerization reaction of the (meth)acrylic monomer is accelerated. Furthermore, it is considered that by having at least one electron-donating group in the hydroquinone-based compound, the reaction of the hydroxyl group is accelerated, with the result that the catalytic cycle is further activated.

### INDUSTRIAL APPLICABILITY

The present invention can be suitably used for bonding at a portion where members to be bonded are in close contact with each other.

## Claims

1. An anaerobic adhesive composition, comprising:
a (meth)acrylic monomer;
an organic peroxide; and
an anaerobic curing accelerator,
wherein the anaerobic curing accelerator contains a hydroquinone-based compound represented by formula (1) described below and benzoquinone, 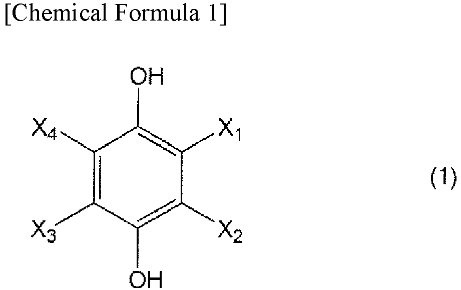 (in formula (1), X1 to X4 each represent a hydrogen atom or one substituent, and at least one of X1 to X4 is a substituent).

2. The anaerobic adhesive composition according to claim 1, wherein
a content of the hydroquinone-based compound in the anaerobic adhesive composition is 0.1 to 5 parts by mass relative to 100 parts by mass of the (meth)acrylic monomer, and
a content of the benzoquinone in the anaerobic adhesive composition is 0.01 to 1.00 part by mass relative to 100 parts by mass of the (meth)acrylic monomer.

3. The anaerobic adhesive composition according to claim 1, wherein
a content of the hydroquinone-based compound in the anaerobic adhesive composition is 1 to 4 parts by mass relative to 100 parts by mass of the (meth)acrylic monomer, and
a content of the benzoquinone in the anaerobic adhesive composition is 0.01 to 1.00 part by mass relative to 100 parts by mass of the (meth)acrylic monomer.

4. The anaerobic adhesive composition according to any one of claims 1 to 3, further comprising a thickener.
